# EUROPÄISCHE PATENTSCHRIFT

(11) **EP 3 510 229 B1**
(45) Veröffentlichungstag und Bekanntmachung des Hinweises auf die Patenterteilung: **28.04.2021**
(21) Anmeldenummer: 17761518.4
(22) Anmeldetag: 05.09.2017
(51) Int. Cl.: E05F 15/697

(54) **ANTRIEBSVORRICHTUNG MIT AKUSTISCHER ENTKOPPLUNG FÜR EINEN FENSTERHEBER**
ACOUSTICALLY DECOUPLED DRIVE DEVICE FOR A WINDOW LIFTER
SYSTÈME DE COMMANDE POUR LÈVE-VITRE, DOTÉ D'UN DÉCOUPLAGE ACOUSTIQUE

(30) Priorität: 06.09.2016 DE 102016216884
(43) Veröffentlichungstag der Anmeldung: 17.07.2019
(73) Patentinhaber: Brose Fahrzeugteile SE & Co. Kommanditgesellschaft, Bamberg, 96052 Bamberg (DE)
(72) Erfinder: KALB, Roland, 96269 Rossach (DE); LANGE, Gabriele, 96364 Marktrodach (DE)
(74) Vertreter: Maikowski & Ninnemann Patentanwälte Partnerschaft mbB
(86) Internationale Anmeldenummer: PCT/EP2017/072205
(87) Internationale Veröffentlichungsnummer: WO 2018/046483

(56) Entgegenhaltungen:
- EP-A1- 2 320 541
- US-A1- 2003 160 124

## Beschreibung

Die Erfindung betrifft eine Antriebsvorrichtung für eine Verstelleinrichtung zum Verstellen eines Fahrzeugteils, insbesondere eines Fensterhebers, nach dem Oberbegriff des Anspruchs 1.

Eine derartige Antriebsvorrichtung umfasst ein Trägerelement, ein durch eine Motoreinheit antreibbares Getriebeelement, z.B. ein Antriebsrad, und ein an dem Trägerelement angeordnetes Antriebsgehäuse, das ein Lagerelement zum drehbaren Lagern des Getriebeelements um eine Drehachse aufweist.

Eine derartige Antriebsvorrichtung kann insbesondere Bestandteil einer Fensterhebereinrichtung sein und somit zum Verstellen einer Fensterscheibe dienen. Eine solche Antriebsvorrichtung kann aber auch zum Verstellen eines anderen Verstellelements, beispielsweise eines Abdeckelements in Form eines Schiebedachs oder dergleichen, in einem Fahrzeug dienen.

Bei einem Fensterheber können beispielsweise an einem Aggregateträger eines Türmoduls ein oder mehrere Führungsschienen angeordnet sein, an denen je ein mit einer Fensterscheibe gekoppelter Mitnehmer geführt ist. Der Mitnehmer ist z.B. über ein biegeschlaffes, zur Übertragung von (ausschließlich) Zugkräften ausgelegtes Zugseil mit der Antriebsvorrichtung gekoppelt, wobei das Zugseil derart an der Seiltrommel angeordnet ist, dass sich bei einer Drehbewegung der Seiltrommel das Zugseil mit einem Ende auf die Seiltrommel aufwickelt und mit einem anderen Ende von der Seiltrommel abwickelt. Es kommt somit zu einem Verschieben einer durch das Zugseil gebildeten Seilschlaufe und dem entsprechend zu einem Bewegen des Mitnehmers entlang der jeweils zugeordneten Führungsschiene. Angetrieben durch die Antriebsvorrichtung kann somit die Fensterscheibe verstellt werden, beispielsweise um eine Fensteröffnung an einer Fahrzeugseitentür freizugeben oder zu schließen.

Eine solche Antriebsvorrichtung muss generell dazu ausgestaltet sein, ein hinreichend großes Drehmoment zum Verstellen der Fensterscheibe zur Verfügung zu stellen. Die Antriebsvorrichtung soll dabei einen kleinen Bauraum aufweisen können, soll einfach beispielsweise an einem zugeordneten Trägerelement, beispielsweise dem Aggregateträger eines Türmoduls, zu montieren sein und soll im Betrieb ein günstiges Betriebsverhalten bei geringer Geräuschentwicklung beispielsweise an einem Türmodul einer Fahrzeugtür aufweisen US 2003/0160124 A1 offenbart ein Beispiel einer Antriebsvorrichtung.

Bei einem aus der DE 10 2004 044 863 A1 bekannten Antrieb für eine Verstelleinrichtung in einem Kraftfahrzeug ist eine Seiltrommel auf einem Lagerdom eines Antriebsgehäuses angeordnet, wobei das Antriebsgehäuse über ein Befestigungselement in Form einer Schraube mit einem Trägerelement in Form eines Aggregateträgers verbunden ist.

Bei einer Antriebsvorrichtung der hier beschriebenen Art wird ein elektrischer Antrieb über das Antriebsgehäuse an dem Trägerelement, beispielsweise einem Aggregateträger eines Türmoduls, angeordnet. Der elektrische Antrieb ist hierbei derart an dem Trägerelement festzulegen, dass im Betrieb Drehmomente wirkungsvoll in die Seiltrommel und darüber auf das zu verstellende Verstellteil übertragen werden können. Der Antrieb ist dazu drehfest an dem Trägerelement festzulegen. Insbesondere müssen Drehmomente, die (auch) zwischen dem Antrieb und dem Trägerelement wirken, wirkungsvoll aufgefangen und abgeleitet werden.

Im Betrieb kann es zu einer Schwingungsanregung an dem Antrieb kommen, die zu einer akustischen Anregung von Bauteilen zum Beispiel eines Türmoduls führen kann.

Um eine übermäßige Geräuschentwicklung im Betrieb der Antriebsvorrichtung zu vermeiden, ist daher dafür Sorge zu tragen, dass schwingungsanregende Bauteile, insbesondere der elektrische Antrieb, von zu Schwingungen anregbaren Strukturen und Bauteilen akustisch entkoppelt werden und es somit im Betrieb zu keiner oder zumindest nur zu einer reduzierten Schwingungsanregung an einem Türmodul oder an einer anderen Baugruppe, an der die Antriebsvorrichtung angeordnet ist, kommen kann. Es ist in diesem Zusammenhang insbesondere wünschenswert, dass der elektrische Antrieb von dem Trägerelement, an dem der Antrieb angeordnet ist, akustisch entkoppelt ist.

Zudem soll die Antriebsvorrichtung aber auch einfach mit wenigen Montageschritten zu montieren sein, und ein Trägerelement soll günstig herstellbar sein.

Aufgabe der vorliegenden Erfindung ist es, eine Antriebsvorrichtung zur Verfügung zu stellen, die insbesondere einfach zu montieren ist und ein günstiges Betriebsverhalten im Betrieb aufweisen kann.

Diese Aufgabe wird durch einen Gegenstand mit den Merkmalen des Anspruchs 1 gelöst.

Demnach weist das Trägerelement zumindest ein erstes Formschlusselement und das Antriebsgehäuse zumindest ein zweites Formschlusselement auf, die zur Drehsicherung miteinander in Eingriff stehen, wobei zwischen dem zumindest einen ersten Formschlusselement und dem zumindest einen zweiten Formschlusselement ein elastisches Dämpfungselement angeordnet ist wobei das erste Formschlusselement und das zweite Formschlusselement in einem ersten Belastungszustand über das elastische Dämpfungselement entlang zumindest einer Raumrichtung zueinander gedämpft abgestützt sind, und in einem gegenüber dem ersten Belastungszustand erhöhten, zweiten Belastungszustand in Anlage miteinander gelangen.

Das Antriebsgehäuse wird z.B. über ein zentrales Befestigungselement, das eine Befestigung über das das Getriebeelement lagernde Lagerelement herstellt, an dem Trägerelement, beispielsweise einem Aggregateträger eines Türmoduls, gehalten. Die Befestigung des Antriebsgehäuses an dem Trägerelement kann somit über ein (einziges) zentrales Befestigungselement, zum Beispiel ein Schraubelement, hergestellt werden, sodass sich eine einfache Montage ergeben kann.

Um bei einer solchen zentralen Befestigung über ein Befestigungselement eine Drehsicherung herzustellen, ist eine Drehsicherungseinrichtung vorgesehen, die ausgestaltet ist, zwischen dem Antriebsgehäuse und dem Trägerelement wirkende Drehmomente aufzunehmen und abzuleiten. Über die Drehsicherungseinrichtung wird somit sichergestellt, dass das Antriebsgehäuse um die Drehachse drehfest an dem Trägerelement gehalten ist.

Um hierbei eine Schwingungsanregung des Trägerelements über das Antriebsgehäuse zumindest zu reduzieren, weist die Drehsicherungseinrichtung ein elastisches Dämpfungselement auf, das zwischen dem Antriebsgehäuse und dem Trägerelement wirkt. Die Drehsicherung erfolgt somit über ein elastisches Dämpfungselement, das einen Übergang zwischen dem Antriebsgehäuse und dem Trägerelement elastisch dämpft, sodass über die Drehsicherungseinrichtung es zu keiner oder zumindest nur zu einer reduzierten Schwingungsanregung an dem Trägerelement kommen kann.

Die Drehsicherungseinrichtung wird durch das zumindest eine erste Formschlusselement des Trägerelements und das zumindest eine zweite Formschlusselement des Antriebsgehäuses gebildet. Die Formschlusselemente sind zur Drehachse beabstandet und somit geeignet, durch ihren Eingriff ineinander Drehmomente aufzunehmen und abzustützen. Das elastische Dämpfungselement wirkt zwischen einem zugeordneten ersten Formschlusselement und einem zugeordneten zweiten Formschlusselement und wirkt auf diese Weise - zumindest in einem ersten Belastungszustand, der einem Zustand bei normaler, üblicher Belastungen entsprechen kann - dämpfend zwischen den Formschlusselementen.

Der Eingriff der Formschlusselemente ineinander ist hierbei jedoch derart beschaffen, dass bei erhöhter Belastung - also in einem zweiten Belastungszustand, in dem die Belastung höher als in dem ersten Belastungszustand ist - die Formschlusselemente miteinander in Anlage gelangen. Auf diese Weise kann eine übermäßige Komprimierung des elastischen Dämpfungselements vermieden werden, was Beschädigungen an dem elastischen Dämpfungselement verhindern und die Lebensdauer des elastischen Dämpfungselements verlängern kann.

Eines der Formschlusselemente, also das erste Formschlusselement oder das zweite Formschlusselement, weist vorzugsweise einen Formschlusszapfen auf. Beispielsweise kann das Trägerelement einen solchen Formschlusszapfen aufweisen, der von einem Flächenabschnitt des Trägerelements vorsteht. Das jeweils andere Formschlusselement weist dann eine Formschlussöffnung auf, in die der Formschlusszapfen eingreift. Beispielsweise kann das zweite Formschlusselement des Antriebsgehäuses eine solche Formschlussöffnung aufweisen, mit der der Formschlusszapfen des Trägerelements in Eingriff steht.

Die Drehsicherungseinrichtung wirkt dann durch den Eingriff des Formschlusszapfens an einem der Bauteile in die Formschlussöffnung an dem anderen der Bauteile. Ein solcher Formschlusszapfen kann beispielsweise an dem Trägerelement angeordnet sein und in eine Formschlussöffnung an dem Antriebsgehäuse eingreifen. Umgekehrt ist auch möglich, dass ein Formschlusszapfen an dem Antriebsgehäuse angeordnet ist und in eine Formschlussöffnung an dem Trägerelement angreift. Die Drehsicherung wird somit durch einen formschlüssigen Eingriff bewirkt, sodass das Antriebsgehäuse formschlüssig gegenüber dem Trägerelement festgelegt ist, um Drehmomente, die um die Drehachse wirken, aufzunehmen und abzuleiten.

Der Eingriff zwischen dem Formschlusszapfen und der Formschlussöffnung erfolgt radial beabstandet zur Drehachse, sodass über diesen Eingriff Drehmomente wirkungsvoll aufgenommen und abgeleitet werden können. Vorzugsweise sind hierbei mehrere Paare von Formschlusszapfen einerseits und Formschlussöffnungen andererseits vorgesehen, sodass die Drehsicherung über einen Eingriff von Formschlusszapfen in zugeordnete Formschlussöffnungen an mehreren Stellen um die Drehachse herum bereitgestellt wird.

Jeder Formschlusszapfen weist, in einer Ausgestaltung, beispielsweise einen zentralen, z.B. zylindrischen (stiftförmigen) Abschnitt auf, an dem das elastische Dämpfungselement angeordnet ist. Der zentrale Abschnitt ist hierbei zumindest abschnittsweise von dem elastischen Dämpfungselement überzogen, sodass das elastische Dämpfungselement sich in Zwischenlage zwischen dem zentralen Abschnitt des Formschlusszapfens und einer Wandung der Formschlussöffnung befindet und somit der Eingriff des Formschlusszapfens in die Formschlussöffnung akustisch gedämpft ist.

Das elastische Dämpfungselement ist vorzugsweise aus einem elastischen Material, beispielsweise einem Elastomer oder einem Gummimaterial, hergestellt. Das elastische Dämpfungselement weist eine (deutlich) größere Elastizität (also geringere Steifigkeit) als insbesondere das Trägerelement und das Antriebsgehäuse auf, die z.B. auch aus Kunststoff gefertigt sind, aber eine starre Struktur aufweisen.

Das Formschlusszapfen kann, in einer Ausgestaltung, einen radial von dem zentralen Abschnitt vorspringenden Wangenabschnitt, z.B. in Form eines Stifts, aufweisen, der sich parallel zur Drehachse an dem zentralen Abschnitt erstreckt. Der Wangenabschnitt ist benachbart zu einem elastischen Steg des elastischen Dämpfungselements, der vorzugsweise gegenüber dem Wangenabschnitt radial nach außen vorsteht und an einer die Formschlussöffnung umfänglich umgebenden Mantelfläche anliegt, sodass der Formschlusszapfen über den elastischen Steg in radialer Richtung innerhalb der Formschlussöffnung abgestützt ist. Der Übergang zwischen dem Formschlusszapfen und der die Formschlussöffnung umgebenden Mantelfläche ist somit gedämpft, sodass Schwingungen lediglich in gedämpfter Weise vom Antriebsgehäuse auf das Trägerelement übertragen werden können.

Vorzugsweise weist das Formschlusszapfen mehrere umfänglich um den zentralen Abschnitt verteilte Wangenabschnitte auf, während das elastische Dämpfungselement mehrere Stege aufweist, die zwischen die Wangenabschnitte greifen. Jeder Wangenabschnitt ist zwischen einem Paar von Stegen aufgenommen, sodass ein jeder Formschlusszapfen radial über um den zentralen Abschnitt verteilte elastische Stege gegenüber der die Formschlussöffnung umgebenden Mantelfläche abgestützt ist. Auf diese Weise wird eine Dämpfung in einer Ebene senkrecht zur Drehachse bereitgestellt, mittels derer sowohl translatorisch als auch rotatorisch wirkende Kräfte und Momente aufgefangen, abgeleitet und gedämpft werden können.

Über den zumindest einen Wangenabschnitt kann ein übermäßiges Komprimieren des elastischen Dämpfungselements verhindert werden, indem der Formschlusszapfen über den Wangenabschnitt mit der Mantelfläche an der die Formschlussöffnung ausbildenden Befestigungseinrichtung in Anlage gelangt, wenn es zu starken Schwingungen an dem Antriebsgehäuse kommt. Über das zwischen den Wangenabschnitten des Formschlusszapfens und der inneren, umfänglichen Mantelfläche der Formschlussöffnung bestehende Spiel und die elastische Abstützung des Formschlusszapfens in der Formschlussöffnung über die Stege des elastischen Dämpfungselements wird eine Dämpfung der Schwingungsanregung an dem Trägerelement bereitgestellt, wobei über das Spiel die maximale Komprimierung des elastischen Dämpfungselements vorgegeben wird. Bei starken Schwingungen (in dem zweiten Belastungszustand), die zu einer das Spiel übersteigenden Relativbewegung des Formschlusszapfens in der Formschlussöffnung führen, kommt es zu einer Anlage zumindest eines der Wangenabschnitte mit der Mantelfläche, sodass eine weitere Komprimierung des elastischen Dämpfungselements verhindert wird. Dies ermöglicht, eine (übermäßige) Verschlechterung der elastischen Eigenschaften des elastischen Dämpfungselements über die Lebensdauer der Antriebsvorrichtung zu vermeiden, sodass die Dämpfungseigenschaften über die Lebensdauer der Antriebsvorrichtung erhalten bleiben.

Vorzugsweise weist das elastische Dämpfungselement einen Kopfabschnitt auf, der den zentralen Abschnitt an einer quer zur Drehachse erstreckten Stirnfläche zumindest teilweise überdeckt. Ist der Formschlusszapfen beispielsweise an einem Flächenabschnitt des Trägerelements angeordnet und steht der zentrale Abschnitt von dem Flächenabschnitt vor, so überdeckt das elastische Dämpfungselement mit seinem Kopfabschnitt den zentralen Abschnitt an der von dem Flächenabschnitt abgewandten Stirnfläche. In axialer Richtung nimmt das elastische Dämpfungselement somit eine Zwischenlage zwischen dem Formschlusszapfen und einem Boden der Formschlussöffnung ein, wobei zusätzlich an dem Kopfabschnitt ein Distanzelement zum Beispiel in Form eines Noppens oder dergleichen angeordnet sein kann, über das ein Toleranzausgleich zwischen dem Formschlusszapfen und dem Boden der Formschlussöffnung eingestellt werden kann.

Über das Distanzelement kann insbesondere ein Toleranzausgleich zwischen den Wangenabschnitten des Formschlusszapfens und dem Boden der Formschlussöffnung und zudem ein elastisches Spiel in axialer Richtung vorgegeben werden.

Das zumindest eine elastische Dämpfungselement kann, in einer Ausgestaltung, einstückig mit einem Dichtring eines Dichtelements geformt sein. Der Dichtring dient dazu, einen Übergang zwischen dem Antriebsgehäuse und dem Trägerelement feuchtigkeitsdicht abzudichten, wobei die elastischen Dämpfungselemente beispielsweise über Laschen mit dem Dichtring zur Ausbildung eines einheitlichen Dichtelements verbunden sind. Das Dichtelement besteht vorzugsweise insgesamt aus einem elastischen, komprimierbaren Material, beispielsweise einem Elastomer oder einem Gummimaterial.

Das Dämpfungselement kann aber separat von einer Dichtung ausgebildet sein.

In einer konkreten Ausgestaltung weist die Antriebsvorrichtung eine Seiltrommel und ein an einer von dem Antriebsgehäuse abgewandten Seite des Trägerelements angeordnetes Seilausgangsgehäuse auf. Das Seilausgangsgehäuse bildet ein Lagerelement zum drehbaren Lagern der Seiltrommel um die Drehachse aus, sodass über das Seilausgangsgehäuse die Seiltrommel drehbar an dem Trägerelement gehalten ist.

Hierbei kann vorgesehen sein, dass das Befestigungselement zwischen dem Lagerelement des Seilausgangsgehäuses und dem Lagerelement des Antriebsgehäuses wirkt, beispielsweise indem das Befestigungselement von einem Lagerelement in das andere Lagerelement eingeschraubt ist und das Seilausgangsgehäuse auf diese Weise gegenüber dem Antriebsgehäuse verspannt ist. Das Antriebsgehäuse ist somit über das Seilausgangsgehäuse an dem Trägerelement festgelegt, wobei die dämpfend wirkende Drehsicherungseinrichtung zur Aufnahme von Drehmomenten an dem Antriebsgehäuse dient.

Das Lagerelement des Seilausgangsgehäuses, an dem die Seiltrommel drehbar gelagert ist, und das Lagerelement des Antriebsgehäuses, an dem das Getriebeelement drehbar gelagert ist, können koaxial zueinander angeordnet sein derart, dass die Lagerelemente eine gemeinsame Drehachse für die Seiltrommel und das Getriebeelement definieren.

Dadurch, dass das Seilausgangsgehäuse auf der einen, ersten Seite des Trägerelements und das Antriebsgehäuse auf der anderen, zweiten Seite des Trägerelements über ein (einziges) Befestigungselement, das den Lagerelementen wirkt, aneinander befestigt und somit an dem Trägerelement festgelegt sind, ergibt sich eine sehr einfache Montage. Insbesondere kann zur Montage das Seilausgangsgehäuse einerseits und das Antriebsgehäuse andererseits an das Trägerelement angesetzt werden, um sodann das Seilausgangsgehäuse und das Antriebsgehäuse über das Befestigungselement, beispielsweise ein Schraubelement, miteinander zu verbinden, vorzugsweise axial zueinander zu verspannen.

Das Befestigungselement kann hierbei von einem der Lagerelemente in das andere der Lagerelemente eingreifen und die Lagerelemente dadurch miteinander verbinden. Über die Lagerelemente werden das Seilausgangsgehäuse einerseits und das Antriebsgehäuse andererseits somit zueinander festgelegt.

Die Seiltrommel ist, bei betriebsgemäßer Anordnung in einem Fahrzeug beispielsweise an einer Fahrzeugseitentür, z.B. in einem Nassraum angeordnet, während die Motoreinheit der Antriebsvorrichtung in einem Trockenraum gelegen ist. Die Trennung zwischen dem Nassraum und dem Trockenraum kann hierbei durch das Trägerelement, beispielsweise ein aus Kunststoff hergestellter Aggregateträger eines Türmoduls, bereitgestellt werden. Durch die Montage des Seilausgangsgehäuses einerseits des Trägerelements und das Antriebsgehäuse andererseits des Trägerelements und der Verbindung über ein (einziges) zentrales Befestigungselement kann auf einfache Weise eine solche Nass-Trockenraum-Trennung erhalten werden, ohne dass diese Nass-Trockenraum-Trennung durch von einer Seite zur anderen Seite greifende Befestigungselemente beeinträchtigt ist.

Das Lagerelement zur Lagerung der Seiltrommel kann beispielsweise als zylindrischer Lagerdom, der von einem Boden des Seilausgangsgehäuses vorsteht, ausgebildet sein. Zudem kann das Lagerelement des Antriebsgehäuses, das zum Lagern des Getriebeelements auf der von der Seiltrommel abgewandten Seite des Trägerelements dient, als zylindrischer Lagerdom an dem Antriebsgehäuse ausgebildet sein. Über das Befestigungselement werden die Lagerdome axial zueinander verspannt, sodass darüber das Seilausgangsgehäuse einerseits und des Antriebsgehäuses andererseits an dem Trägerelement festgelegt werden.

Über das Befestigungselement, das zwischen dem Lagerelement des Seilausgangsgehäuses und dem Lagerelement des Antriebsgehäuses wirkt, werden das Seilausgangsgehäuse und das Antriebsgehäuse - unter Zwischenlage des Trägerelements - axial zueinander festgelegt und durch Verspannen zueinander an dem Trägerelement befestigt. Über die an dem Seilausgangsgehäuse gelagerte Seiltrommel können hierbei Drehmomente auf das Seilausgangsgehäuse wirken, während über das an dem Lagerelement des Antriebsgehäuses gelagerte Getriebeelement auch Drehmomente an dem Antriebsgehäuse anliegen können. Es ist somit zu gewährleisten, dass das Seilausgangsgehäuse genauso wie das Antriebsgehäuse sich im Betrieb der Antriebsvorrichtung nicht rotatorisch zu dem Trägerelement und zueinander bewegen können. Es ist somit eine Drehsicherung (auch) zwischen dem Seilausgangsgehäuse und dem Trägerelement einerseits und dem Antriebsgehäuse und dem Trägerelement andererseits vorzusehen.

Hierzu kann beispielsweise der zumindest eine Gehäuseabschnitt, über den der Boden des Seilausgangsgehäuses mit dem Trägerelement verbunden ist, drehfest an dem Trägerelement festgelegt sein. So kann an einem Fußabschnitt des zumindest einen Gehäuseabschnitts oder dem Trägerelement ein Formschlusselement vorgesehen sein, das bei montiertem Seilausgangsgehäuse mit einer Formschlussöffnung an dem jeweils anderen Bauteil (also dem Trägerelement oder dem Fußabschnitt des zumindest einen Gehäuseabschnitts) in Eingriff steht. Über den Eingriff des Formschlusselements in die Formschlussöffnung wird somit eine Drehsicherung zwischen dem Seilausgangsgehäuse und dem Trägerelement bereitgestellt. Dadurch, dass der zumindest eine Gehäuseabschnitt radial zu dem Lagerelement des Seilausgangsgehäuses beabstandet ist und somit radial außerhalb der Drehachse, um die die Seiltrommel drehbar ist, wirkt, können Drehmomente in günstiger Weise aufgefangen werden.

Über den zumindest einen Gehäuseabschnitt ist das Seilausgangsgehäuse hierbei auch axial an dem Trägerelement abgestützt und - durch axiales Verspannen des Seilausgangsgehäuses mit dem Antriebsgehäuse - auch gegenüber dem Trägerelement verspannt. Die Spannkraft des Befestigungselements wird über den zumindest einen Gehäuseabschnitt an dem Trägerelement abgestützt.

Es können somit sowohl das Seilausgangsgehäuse als auch das Antriebsgehäuse in formschlüssiger Weise drehfest an dem Trägerelement gesichert sein. Dieser Formschluss wird bei Ansetzen des Seilausgangsgehäuses an die eine Seite des Trägerelements und bei Ansetzen des Antriebsgehäuses an die andere Seite des Trägerelements selbsttätig hergestellt, ohne dass hierzu gesonderte Montageschritte erforderlich sind und weitere Befestigungselemente, beispielsweise in Form von Schraubelementen, angebracht werden müssen. Das (axiale) Festlegen des Seilausgangsgehäuses und des Antriebsgehäuses zueinander erfolgt vorzugsweise allein über das zentral zwischen den Lagerelementen des Seilausgangsgehäuses und des Antriebsgehäuses wirkende Befestigungselement.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Antriebsvorrichtung;
- Fig. 1B: die Explosionsansicht gemäß Fig. 1A, aus anderer Perspektive;
- Fig. 2: eine Ansicht eines Seilausgangsgehäuses vor Ansetzen an ein Trägerelement;
- Fig. 3: eine andere Ansicht des Seilausgangsgehäuses vor Ansetzen an das Trägerelement;
- Fig. 4A: eine Ansicht des Seilausgangsgehäuses an dem Trägerelement;
- Fig. 4B: eine ausschnittsweise vergrößerte Ansicht der Anordnung gemäß Fig. 4A;
- Fig. 5: eine gesonderte Ansicht des Seilausgangsgehäuses, schräg von unten;
- Fig. 6: eine Draufsicht auf das Seilausgangsgehäuse;
- Fig. 7: eine Querschnittansicht entlang der Linie A-A gemäß Fig. 6;
- Fig. 8: die Querschnittansicht gemäß Fig. 7, bei an das Trägerelement angesetztem Seilausgangsgehäuse;
- Fig. 9: eine Querschnittansicht entlang der Linie B-B gemäß Fig. 4A, vor Verspannen des Seilausgangsgehäuses mit einem Antriebsgehäuse über ein Befestigungselement;
- Fig. 10: eine Ansicht eines Dichtelements an dem Trägerelement;
- Fig. 11: eine gesonderte Ansicht des Trägerelements;
- Fig. 12: eine Seitenansicht des Trägerelements mit daran angeordnetem Seilausgangsgehäuse;
- Fig. 13A: eine gesonderte Ansicht des Dichtelements;
- Fig. 13B: eine andere perspektivische Ansicht des Dichtelements;
- Fig. 14: eine Ansicht des Antriebsgehäuses mit daran angeordnetem Dichtelement;
- Fig. 15: eine Ansicht des Trägerelements von der dem Antriebsgehäuse zugewandten Seite;
- Fig. 16A: eine Schnittansicht entlang der Linie C-C gemäß Fig. 15, bei an das Trägerelement angesetztem Antriebsgehäuse;
- Fig. 16B: eine vergrößerte Ansicht im Ausschnitt A gemäß Fig. 16A;
- Fig. 16C: eine vergrößerte Schnittansicht entlang der Linie D-D gemäß Fig. 15;
- Fig. 17: eine Seitenansicht der Antriebsvorrichtung;
- Fig. 18A: eine Schnittansicht entlang der Linie E-E gemäß Fig. 17;
- Fig. 18B: eine vergrößerte Ansicht im Ausschnitt A gemäß Fig. 18A;
- Fig. 18C: eine Schnittansicht entlang der Linie F-F gemäß Fig. 18B; und
- Fig. 19: eine schematische Ansicht einer Verstelleinrichtung eines Fahrzeugs in Form eines Fensterhebers.

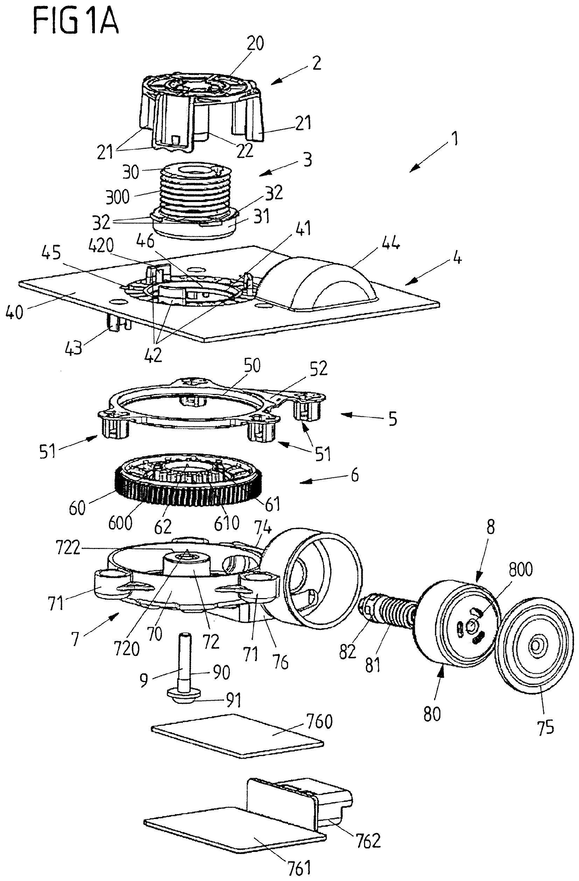

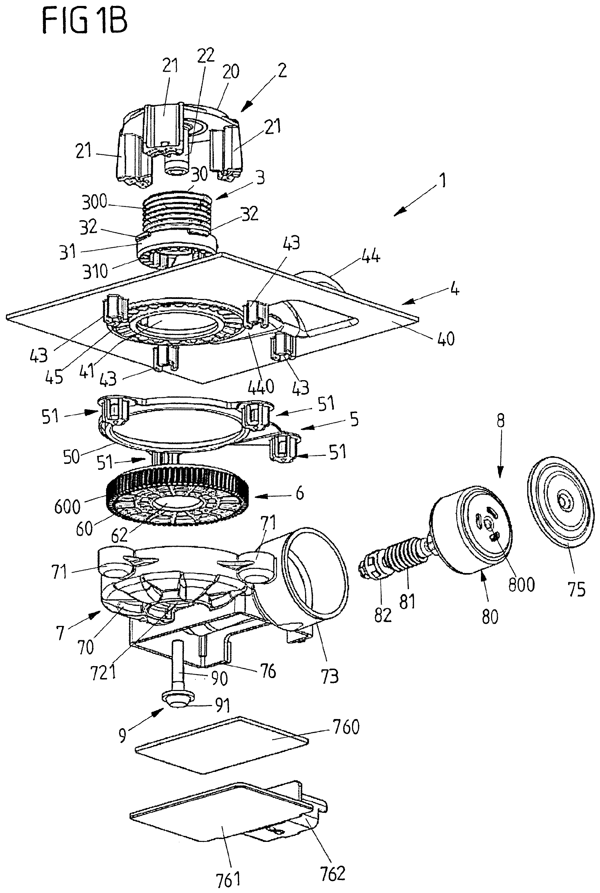

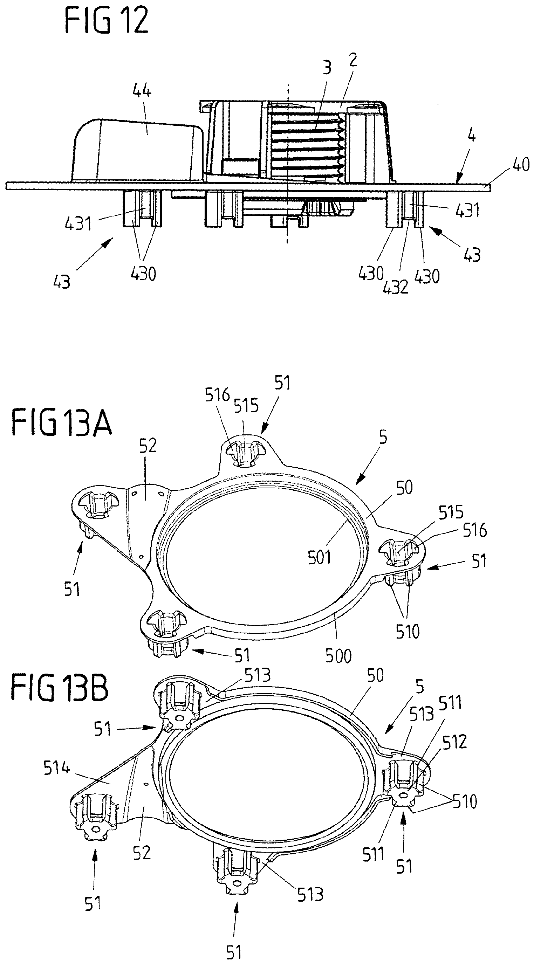

Fig. 1A, 1B bis 18A-18C zeigen ein Ausführungsbeispiel einer Antriebsvorrichtung 1, die beispielsweise als Antrieb in einer Verstelleinrichtung zum Verstellen einer Fensterscheibe beispielsweise einer Fahrzeugseitentür Verwendung finden kann.

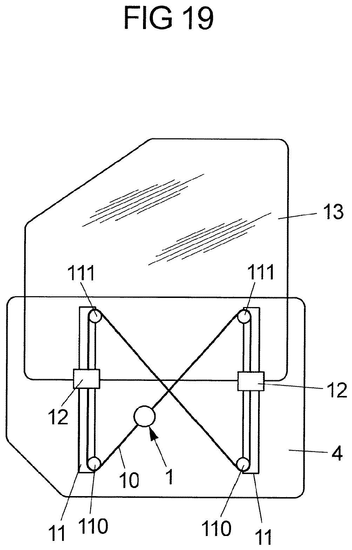

Eine solche Verstelleinrichtung in Form eines Fensterhebers, beispielhaft dargestellt in Fig. 19, weist beispielsweise ein Paar von Führungsschienen 11 auf, an denen jeweils ein Mitnehmer 12, der mit einer Fensterscheibe 13 gekoppelt ist, verstellbar ist. Jeder Mitnehmer 12 ist über ein Zugseil 10, das zur Übertragung von (ausschließlich) Zugkräften ausgebildet ist, mit einer Antriebsvorrichtung 1 gekoppelt, wobei das Zugseil 10 eine geschlossene Seilschlaufe ausbildet und dazu mit seinen Enden mit einer Seiltrommel 3 (siehe zum Beispiel Fig. 1A und 1B) der Antriebsvorrichtung 1 verbunden ist. Das Zugseil 10 erstreckt sich von der Antriebsvorrichtung 1 um Umlenkrollen 110 an den unteren Enden der Führungsschienen 11 hin zu den Mitnehmern 12 und von den Mitnehmern 12 um Umlenkrollen 111 an den oberen Enden der Führungsschienen 11 zurück zur Antriebsvorrichtung 10.

Im Betrieb treibt eine Motoreinheit der Antriebsvorrichtung 1 die Seiltrommel 3 derart an, dass das Zugseil 10 mit einem Ende auf die Seiltrommel 3 aufgewickelt und mit dem anderen Ende von der Seiltrommel 3 abgewickelt wird. Hierdurch verschiebt sich die durch das Zugseil 10 gebildete Seilschlaufe ohne Änderung der frei erstreckten Seillänge, was dazu führt, dass die Mitnehmer 12 an den Führungsschienen 11 gleichgerichtet bewegt und dadurch die Fensterscheibe 13 entlang der Führungsschienen 11 verstellt wird.

Der Fensterheber ist bei dem Ausführungsbeispiel gemäß Fig. 19 an einem Aggregateträger 4 eines Türmoduls angeordnet. Der Aggregateträger 4 kann beispielsweise an einem Türinnenblech einer Fahrzeugtür festzulegen sein und stellt eine vormontierte Einheit dar, die vormontiert mit an dem Aggregateträger 4 angeordnetem Fensterheber an der Fahrzeugtür montiert werden kann.

Die Antriebsvorrichtung 1 ist an einem Flächenabschnitt 40 eines z.B. durch einen Aggregateträger verwirklichten Trägerelements 4 angeordnet und weist ein an einer ersten Seite des Trägerelements 4 angeordnetes Seilausgangsgehäuse 2 und ein an einer von der ersten Seite abgewandten, zweiten Seite des Trägerelements 4 angeordnetes Antriebsgehäuse 7 auf. Das Seilausgangsgehäuse 2 dient dazu, die Seiltrommel 3 an dem Trägerelement 4 zu lagern, während das Antriebsgehäuse 7 unter anderem ein Getriebeelement in Form eines Antriebsrads 6 einfasst, das über eine Motoreinheit 8 angetrieben werden kann und mit der Seiltrommel 3 in Verbindung steht, sodass durch Verdrehen des Antriebsrads 6 die Seiltrommel 3 angetrieben werden kann.

Die Seiltrommel 3 an der ersten Seite des Trägerelements 4 ist, bei bestimmungsgemäßer Anordnung beispielsweise an einer Fahrzeugtür eines Fahrzeugs, in einem Nassraum der Fahrzeugtür angeordnet. Das Antriebsgehäuse 7 befindet sich demgegenüber im Trockenraum der Fahrzeugtür. Die Trennung zwischen Nassraum und Trockenraum wird durch das Trägerelement 4 hergestellt, und entsprechend ist die Schnittstelle zwischen dem Antriebsrad 6 und der Seiltrommel 3 feuchtigkeitsdicht abzudichten, sodass keine Feuchtigkeit von dem Nassraum in den Trockenraum gelangen kann.

Das Seilausgangsgehäuse 2 weist einen Boden 20, ein zentral von dem Boden 20 vorstehendes, zylindrisches Lagerelement 22 in Form eines Lagerdoms und radial zu dem Lagerelement 22 beabstandete Gehäuseabschnitte 21 in Form von parallel zu dem zylindrischen Lagerelement 22 erstreckten Gehäusestegen auf. An dem Lagerelement 22 ist die Seiltrommel 3 drehbar gelagert und dabei derart von dem Seilausgangsgehäuse 2 eingefasst, dass die Seiltrommel 3 an dem Trägerelement 4 gehalten ist.

Die Seiltrommel 3 weist einen Körper 30 und, an der umfänglichen Mantelfläche des Körpers 30, eine in den Körper 30 eingeformte Seilrille 300 zur Aufnahme des Zugseils 10 auf. Mit einem Hohlrad 31 ist die Seiltrommel 3 in eine Öffnung 41 des Trägerelements 4 eingesetzt und mit dem Antriebsrad 6 drehfest verbunden, sodass eine Drehbewegung des Antriebsrads 6 zu einer Drehbewegung der Seiltrommel 3 führt.

Das Antriebsgehäuse 7 ist unter Zwischenlage eines Dichtelements 5 an die andere, zweite Seite des Trägerelements 4 angesetzt und weist einen Gehäusetopf 70 mit einem zentral darin ausgebildeten Lagerelement 72 in Form eines zylindrischen Lagerdoms auf, das eine Öffnung 62 des Antriebsrads 6 durchgreift und das Antriebsrad 6 auf diese Weise drehbar lagert. An den Gehäusetopf 70 schließt ein Schneckengehäuse 74 an, in dem eine Antriebsschnecke 81 einliegt, die drehfest mit einer Antriebswelle 800 eines Elektromotors 80 der Motoreinheit 8 verbunden ist und über eine Schneckenverzahnung mit einer Außenverzahnung 600 eines Körpers 60 des Antriebsrads 6 in Verzahnungseingriff steht. Die Antriebswelle 800 ist über ein Lager 82 an ihrem dem Elektromotor 80 abgewandten Ende in dem Schneckengehäuse 74 gelagert. Der Elektromotor 80 liegt hierbei in einem Motortopf 73 des Antriebsgehäuses 7 ein, der über einen Gehäusedeckel 75 nach außen hin verschlossen ist.

Das Antriebsgehäuse 7 weist zudem ein Elektronikgehäuse 76 auf, in dem eine Platine 760 mit einer darauf angeordneten Steuerelektronik eingefasst ist. Das Elektronikgehäuse 76 ist nach außen hin über eine Gehäuseplatte 761 mit einem daran angeordneten Steckverbinder 762 zur elektrischen Anbindung der Elektronik der Platine 760 verschlossen.

Das Antriebsrad 6 weist, axial von dem Körper 60 vorstehend, ein Verbindungsrad 61 mit einer daran geformten Außenverzahnung 610 auf, das mit dem Hohlrad 31 der Seiltrommel 3 derart in Eingriff steht, dass eine Innenverzahnung 310 des Hohlrads 31 (siehe zum Beispiel Fig. 1B) in Verzahnungseingriff mit der Außenverzahnung 610 des Verbindungsrads 61 steht. Auf diese Weise sind das Antriebsrad 6 und die Seiltrommel 3 drehfest miteinander verbunden, sodass die Seiltrommel 3 durch Antreiben des Antriebsrads 6 an dem Trägerelement 4 verdrehbar ist.

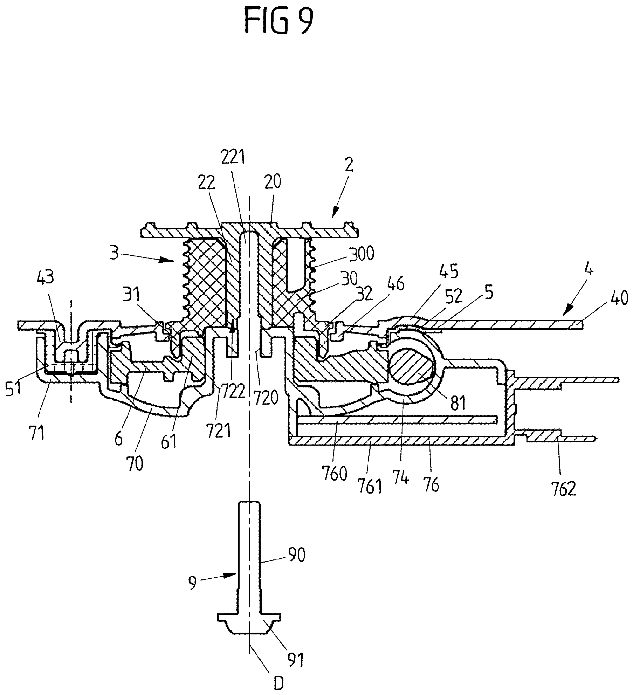

Zur Montage der Antriebsvorrichtung 1 wird das Seilausgangsgehäuse 2 einerseits an das Trägerelement 4 und das Antriebsgehäuse 7 andererseits an das Trägerelement 4 angesetzt. Die Befestigung an dem Trägerelement 4 erfolgt dann dadurch, dass ein Befestigungselement 9 in Form eines Schraubelements in eine Eingriffsöffnung 721 unterseitig des Antriebsgehäuses 7 eingesetzt wird derart, dass sich das Befestigungselement 9 durch eine Öffnung 720 in dem Lagerelement 72 des Antriebsgehäuses 7 hindurch erstreckt (siehe Fig. 9) und zentral in eine Öffnung 221 innerhalb des Lagerelements 22 des Seilausgangsgehäuses 2 eingreift. Über das Befestigungselement 9 werden das Seilausgangsgehäuse 2 und das Antriebsgehäuse 7 axial an den Lagerelementen 22, 72 zueinander verspannt und darüber an dem Trägerelement 4 festgelegt.

Innerhalb der Öffnung 221 des Lagerelements 22 des Seilausgangsgehäuses 2 kann ein Gewinde zum Aufnehmen des Befestigungselements 9 geformt sein. Denkbar und möglich ist aber auch, dass das Befestigungselement 9 selbstschneidend in die Öffnung 221 eingeschraubt wird.

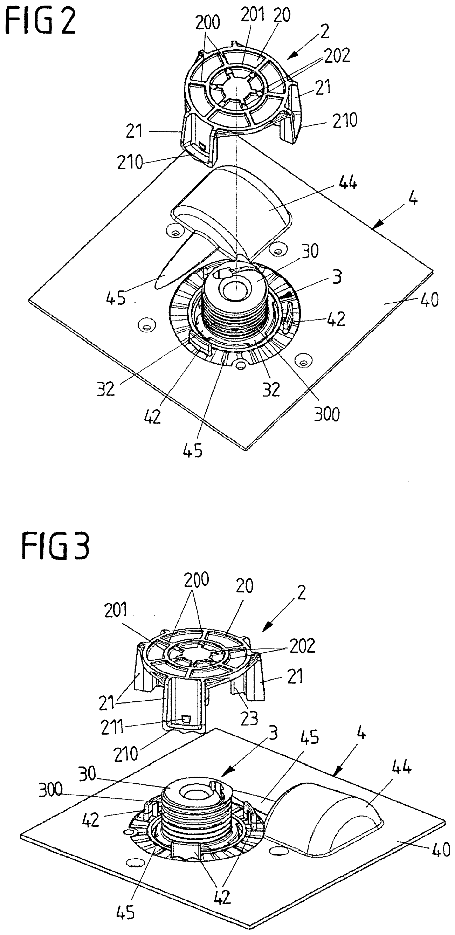

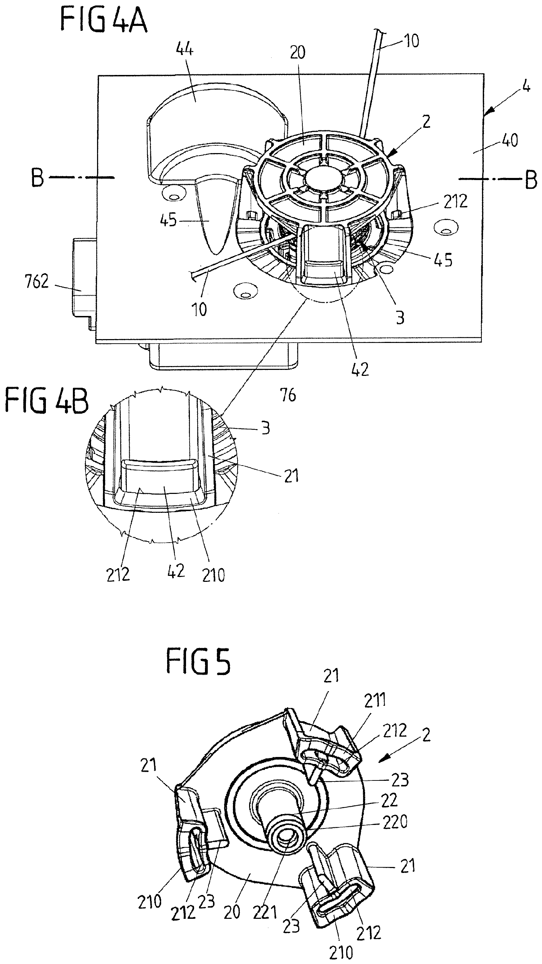

Zur Montage wird das Seilausgangsgehäuse 2 an die erste Seite des Trägerelements 4 angesetzt, sodass das Seilausgangsgehäuse 2 die Seiltrommel 3 einfasst und an dem Trägerelement 4 hält, wie dies in Fig. 2 bis 4A, 4B dargestellt ist. Das Seilausgangsgehäuse 2 kommt hierbei mit seinen radial zum Lagerelement 22 beabstandeten Gehäuseabschnitten 21 über Fußabschnitte 210 in Anlage mit einem Anlagering 45, der eine Öffnung 41 in dem Trägerelement 4 umfänglich umgibt. An dem Anlagering 45 sind axial vorstehende Formschlusselemente 42 in Form von stegförmigen Zapfen ausgebildet, die bei Ansetzen des Seilausgangsgehäuses 2 an das Trägerelement 4 mit Formschlussöffnungen 212 (siehe Fig. 4B) an den Fußabschnitten 210 der Gehäuseabschnitte 21 in Eingriff gelangen und auf diese Weise eine Drehsicherung um die durch das Lagerelement 22 definierte Drehachse D zwischen dem Seilausgangsgehäuse 2 und dem Trägerelement 4 schaffen.

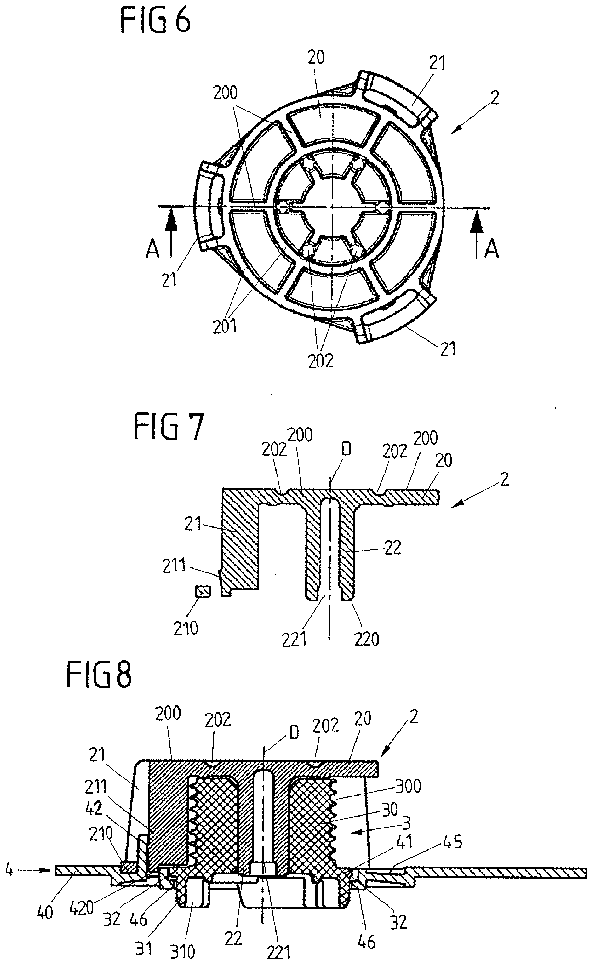

Innenseitig der Formschlusselemente 42 sind Rastausnehmungen 420 geschaffen (siehe zum Beispiel Fig. 1A), in die bei angesetztem Seilausgangsgehäuse 2 Rastelemente 211 in Form von nach außen vorstehenden Rastnasen an den Gehäuseabschnitten 21 eingreifen, wie dies beispielsweise aus einer Zusammenschau von Fig. 6 bis 8 ersichtlich ist. Über diese Rastverbindung wird in einer Vormontagestellung das Seilausgangsgehäuse 2 zusammen mit der darin eingefassten Seiltrommel 3 an dem Trägerelement 4 gehalten, auch wenn das Antriebsgehäuse 7 noch nicht über das Befestigungselement 9 mit dem Seilausgangsgehäuse 2 verspannt ist. Die Rastverbindung vereinfacht somit die Montage und verhindert ein Abfallen des Seilausgangsgehäuses 2 bei noch nicht montiertem Antriebsgehäuse 7.

Die Seiltrommel 3 kommt, in der Vormontagestellung, über radial vorstehende Auflageelemente 32 am oberen Rand des Hohlrads 31 (siehe zum Beispiel Fig. 1A) mit einem Auflagering 46 innerhalb der Öffnung 41 des Trägerelements 4 in Auflage (siehe zum Beispiel Fig. 8), sodass die Seiltrommel 3 in der Vormontagestellung nicht durch die Öffnung 41 hindurchrutschen kann und über das Seilausgangsgehäuse 2 an dem Trägerelement 4 gehalten ist.

Die Auflageelemente 32 dienen insbesondere zur Sicherung der Lage der Seiltrommel 3 an dem Trägerelement 4 in der Vormontagestellung. Nach vollständiger Montage der Antriebsvorrichtung 1 steht die Seiltrommel 3 über das Hohlrad 31 mit dem Antriebsrad 6 in Verbindung und ist axial zwischen dem Seilausgangsgehäuse 2 und dem Antriebsgehäuse 7 festgelegt.

An den Innenseiten der Gehäuseabschnitte 21 sind axial erstreckte und radial nach innen vorspringende Sicherungselemente 23 angeordnet, die der Seilrille 300 an der Mantelfläche des Körpers 30 zugewandt sind und vorzugsweise im Betrieb entlang dieser Mantelfläche gleiten. Über diese Sicherungselemente 23 wird sichergestellt, dass das in der Seilrille 300 aufgenommene Zugseil 10 nicht aus der Seilrille 300 herausspringen kann.

Das Antriebsgehäuse 7 wird an die andere, zweite Seite des Trägerelements 4 angesetzt derart, dass der Motortopf 73 in einer Ausformung 44 in dem Flächenabschnitt 40 und das Schneckengehäuse 74 in einer daran anschließenden Ausformung 440 in dem Flächenabschnitt 40 zu liegen kommt (siehe Fig. 1A, 1B und 2). Bei Ansetzen des Antriebsgehäuses 7 gelangen Formschlusselemente 71 in Form von Eingriffsbuchsen mit darin eingeformten Formschlussöffnungen 710 mit unterseitig von dem Trägerelement 4 vorstehenden Formschlusselementen 43 in Form von Formschlusszapfen in Eingriff. Dadurch, dass die Formschlussöffnungen 710 der Formschlusselemente 71 genauso wie die Formschlusselemente 43 an dem Trägerelement 4 radial zu der durch das Lagerelement 72 des Antriebsgehäuses 7 geschaffenen Drehachse D beabstandet sind, wird durch diesen formschlüssigen Eingriff das Antriebsgehäuse drehfest an dem Trägerelement 4 festgelegt, sodass eine Drehsicherung für das Antriebsgehäuse 7 bereitgestellt wird.

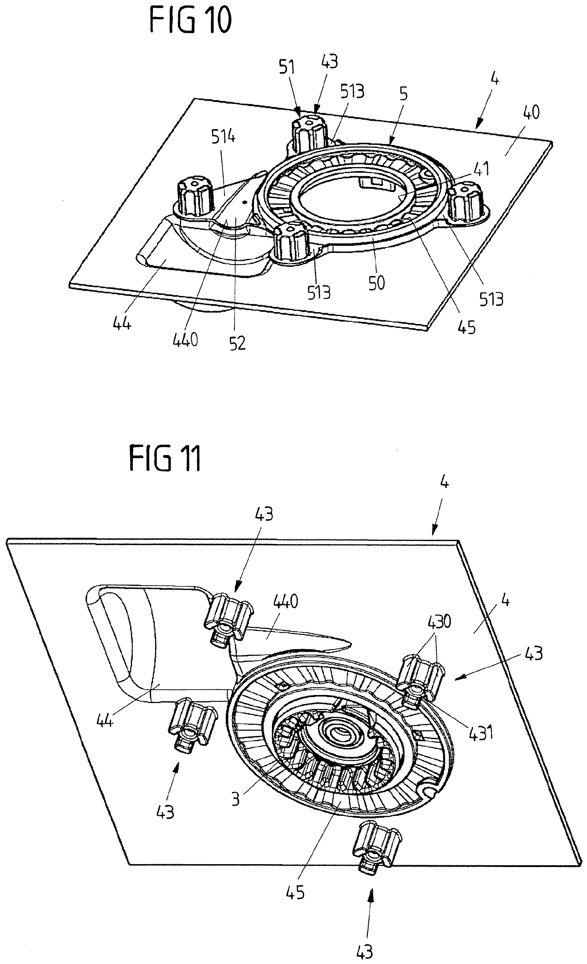

Die Formschlusselemente 43 sind, wie aus Fig. 10 bis 12 ersichtlich, jeweils durch einen zentralen Abschnitt 431 in Form eines Zylinderzapfens gebildet, um den herum jeweils mehrere, bei dem dargestellten Ausführungsbeispiel drei axial erstreckte Wangenabschnitte 430 gruppiert sind, sodass sich zwischen den Wangenabschnitten 430 Zwischenräume ergeben. Die Wangenabschnitte 430 erstrecken sich parallel zu der durch das Lagerelement 72 vorgegebenen Drehachse D und stehen radial und axial über den zentralen Abschnitt 431 hinaus vor.

Wie zum Beispiel aus Fig. 10 ersichtlich, ist das Dichtelement 5 derart an das Trägerelement 4 angesetzt, dass elastische Dämpfungselemente 51, die einstückig mit dem Dichtelement 5 geformt und über Laschen 513, 514 mit dem Dichtring 50 verbunden sind, auf die Formschlusselemente 43 aufgesetzt sind. Jedes elastische Dämpfungselement 51 ist hierbei durch Stege 510 gebildet, die um eine Öffnung 515 herum gruppiert sind und zwischen sich Eingriffsausnehmungen 516 freilassen, in die die Wangenabschnitte 430 der Formschlusselemente 43 eingreifen. Die Anzahl der Stege 515 pro elastischem Dämpfungselement 51 entspricht der Anzahl der Wangenabschnitte 430 pro Formschlusselement 43. Die Wangenabschnitte 430 greifen jeweils derart zwischen die Stege 515 ein, dass jeder Wangenabschnitt 430 zwischen genau zwei Stegen 515 aufgenommen ist.

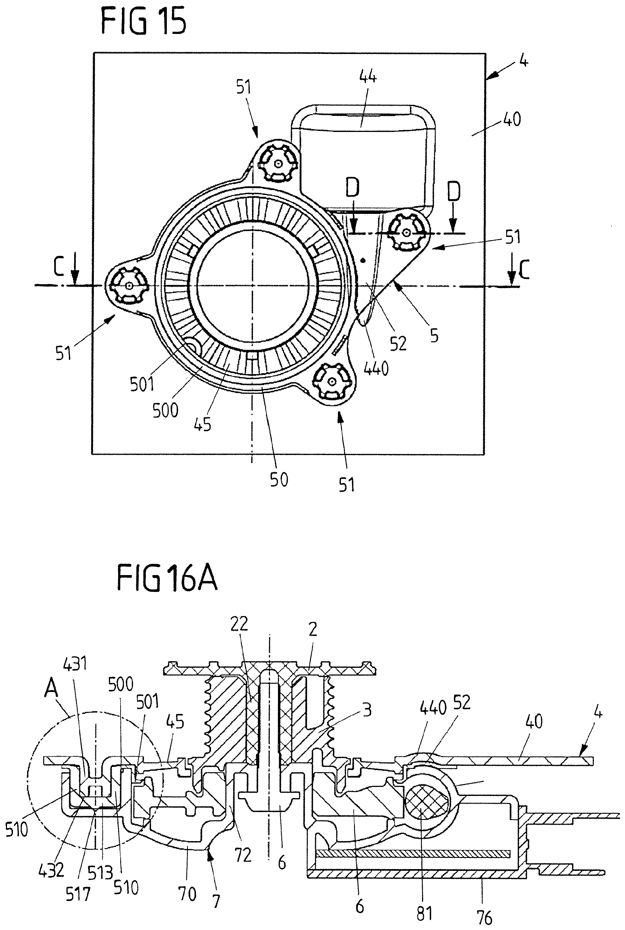

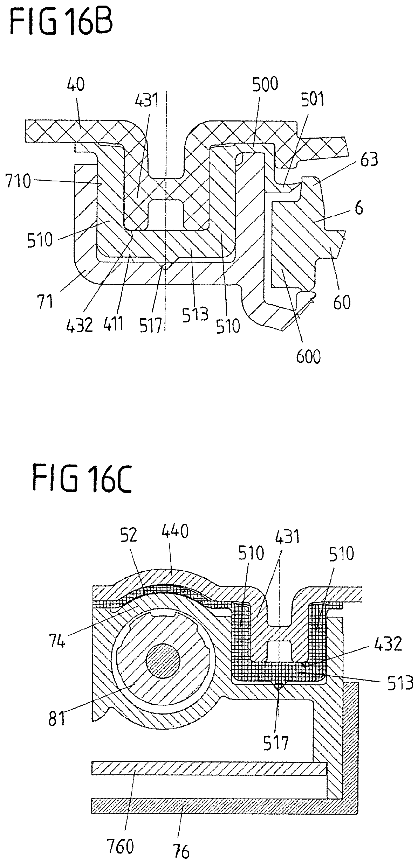

Die Stege 515 eines jeden elastischen Dämpfungselements 51 sind, an ihren dem Dichtring 50 abgewandten Enden, über einen Kopfabschnitt 512 miteinander verbunden. Bei an das Trägerelement 4 angesetztem Dichtelement 5 kommt der Kopfabschnitt 512 an einer Stirnfläche 432 des zylindrischen Abschnitts 431 zu liegen, wie dies beispielsweise aus der Schnittansicht gemäß Fig. 16A und 16B ersichtlich ist.

Die elastischen Dämpfungselemente 51 sind, wie das Dichtelement 5 insgesamt, aus einem elastischen Material, beispielsweise einem weichen Elastomer oder einem Gummimaterial, gefertigt. Über die elastischen Dämpfungselemente 51 wird an den Formschlusselementen 43 eine Dämpfung zwischen dem Antriebsgehäuse 7 und dem Trägerelement 4 bereitgestellt, sodass Schwingungen von dem Antriebsgehäuse 7 nicht oder nur in gedämpfter Weise auf das Trägerelement 4 übertragen werden können.

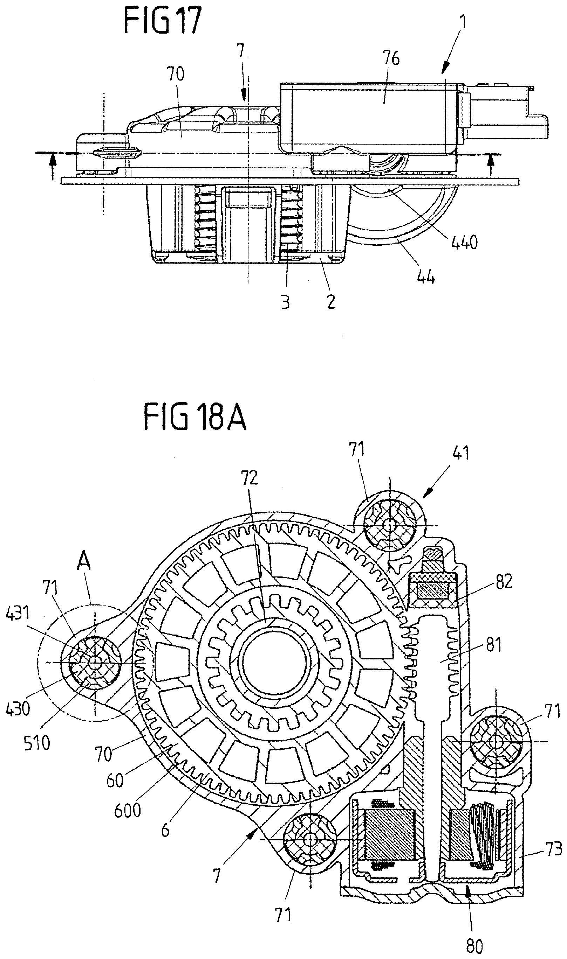

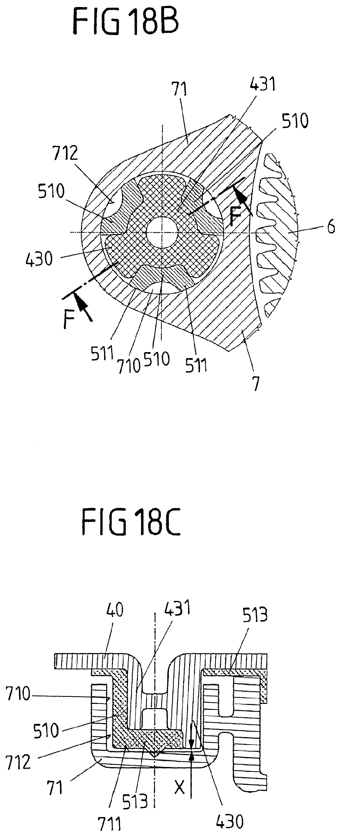

Hierzu stehen die Stege 515 eines jeden elastischen Dämpfungselements 51, wie insbesondere aus der Querschnittansicht eines elastischen Dämpfungselements 51 an einem zugeordneten Formschlusselemente 43 gemäß Fig. 18B ersichtlich, radial über die Wangenabschnitte 430 nach außen hin vor und sind in Anlage mit einer inneren, umfänglichen Mantelfläche 712, die die zugeordnete Formschlussöffnung 710 des Formschlusselements 71 umgibt. Über die Stege 510 sind die Formschlusselemente 43 somit gegenüber dem Formschlusselement 71 radial abgestützt, sodass im normalen Betrieb die Formschlusselemente 43 in elastisch gedämpfter Weise über die elastischen Dämpfungselemente 51 mit dem Antriebsgehäuse 7 wechselwirken.

Über die Stege 510 wird, wie aus Fig. 18B ersichtlich, ein radiales Spiel für das Formschlusselement 43 innerhalb der zugeordneten Formschlussöffnung 710 eingestellt. Im normalen Betrieb kommt das Formschlusselement 43 somit zumindest bei kleinen Schwingungen nicht in Anlage mit der inneren Mantelfläche 712 an der Formschlussöffnung 710, sodass eine Schwingungsanregung an dem Trägerelement 4 zumindest gedämpft ist.

Bei größeren Schwingungen kann das Spiel zwischen dem Formschlusselement 43 und der inneren Mantelfläche 712 jedoch überwunden werden, sodass es zu einer Anlage zwischen zumindest einem der Wangenabschnitte 430 und der inneren Mantelfläche 712 kommen kann. Auf diese Weise wird eine übermäßige Komprimierung an den Stegen 510 des jeweiligen elastischen Dämpfungselements 51 vermieden, sodass gewährleistet ist, dass die elastischen Eigenschaften der elastischen Dämpfungselemente 51 über die Lebensdauer der Antriebsvorrichtung 1 erhalten bleiben.

Über die Stege 510 des elastischen Dämpfungselements 51 wird eine Dämpfung der Schwingungsanregung an dem Trägerelement 4 insbesondere in einer Ebene quer zur Drehachse D bewirkt, also in der Erstreckungsebene des Trägerelements 4. Um zusätzlich eine Dämpfung der Schwingungsanregung auch axial zur Drehachse D zu erreichen, ist an den Kopfabschnitten 513 der elastischen Dämpfungselemente 51, wie aus Fig. 18C ersichtlich, jeweils ein Distanzelement 517 in Form eines Noppens angeordnet, über den ein Spiel X zwischen den Wangenabschnitten 430 eines jeden Formschlusselements 43 und einem Boden 711 der jeweils zugeordneten Formschlussöffnung 710 bereitgestellt wird. Dieses Spiel X dient insbesondere dem Toleranzausgleich.

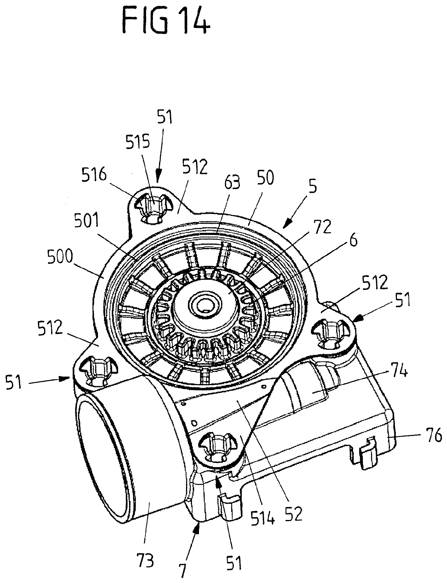

Das Dichtelement 5 weist an seinem Dichtring 50 einen Ring 500 auf, der eine umlaufende Zwischenlage zwischen dem Gehäusetopf 70 des Antriebsgehäuses 7 und dem Trägerelement 4 umfänglich um die zentrale Öffnung 41 an dem Trägerelement 4 einnimmt, wie dies beispielsweise aus Fig. 16B in Zusammenschau mit Fig. 14, 15 und 16A ersichtlich ist. Axial in Richtung des Antriebsrads 6 innerhalb des Gehäusetopfs 70 versetzt und radial zu dem Ring 500 vorspringend ist eine Dichtlippe 501 geformt, die einen dichtenden Übergang zu dem Antriebsrad 6 herstellt, wie dies zum Beispiel in Fig. 16A und in der vergrößerten Ansicht gemäß Fig. 16B dargestellt ist. Über das Dichtelement 50 wird ein feuchtigkeitsdichter Übergang zwischen dem Trägerelement 4 und dem Antriebsgehäuse 7 hergestellt.

An dem Dichtelement 5 ist ein gekrümmter Abschnitt 52 ausgebildet, der im Bereich der Ausformung 45 zur Aufnahme des Schneckengehäuses 74 zu liegen kommt. Der gekrümmte Abschnitt 52 bildet eine Zwischenlage zwischen dem Schneckengehäuse 74 und dem Trägerelement 4, sodass auch darüber eine akustische Entkopplung des Antriebsgehäuses 7 von dem Trägerelement 4 erreicht wird.

Ist das Antriebsgehäuse 7 unter Zwischenlage des Dichtelements 5 an das Trägerelement 4 angesetzt worden, so wird das Antriebsgehäuse 7 über das Befestigungselement 9 mit dem Seilausgangsgehäuse 2 verspannt, sodass darüber das Seilausgangsgehäuse 2 und das Antriebsgehäuse 7 zueinander und an dem Trägerelement 4 festgelegt werden. Wie in Fig. 9 dargestellt, wird das Befestigungselement 9 in die Eingriffsöffnung 721 innerhalb des Lagerelements 72 des Antriebsgehäuses 7 eingesetzt, sodass das Befestigungselement 9 mit einem Schaft 90 die Öffnung 720 am Kopf des Lagerelements 72 durchgreift und in die Öffnung 221 des Lagerelements 22 des Seilausgangsgehäuses 2 eingreift. Ein Kopf 91 des Befestigungselements 9 kommt hierbei an der dem Lagerelement 22 abgewandten Seite der Öffnung 720 zu liegen, sodass durch Einschrauben des Befestigungselements 9 in die Öffnung 221 innerhalb des Lagerelements 22 das Seilausgangsgehäuse 2 zu dem Antriebsgehäuse 7 verspannt wird.

Das Seilausgangsgehäuse 2 weist, wie beispielsweise aus Fig. 2 und 6 ersichtlich ist, an seinem Boden 20 an der dem Trägerelement 4 abgewandten Seite Strukturelemente 200, 201 in Form von Versteifungsrippen auf, die sich radial zu der durch das Lagerelement 22 geschaffenen Drehachse D bzw. umfänglich um die Drehachse D erstrecken und den Boden 20 versteifen. In den radial erstreckten Strukturelementen 200 sind hierbei lokal Aussparungen 202 zur Materialschwächung an den Strukturelementen 200 geschaffen, die entlang eines Rings um die Drehachse D angeordnet sind und eine Sollverformungslinie zur elastischen Verformung des Bodens 20 schaffen.

Wird das Befestigungselement 9 von Seiten des Antriebsgehäuses 7 in das Lagerelement 22 eingeschraubt, so kann sich der Boden 20 zumindest geringfügig verformen, sodass herstellungsbedingte Toleranzen ausgeglichen werden können und das Seilausgangsgehäuse 2 über die Fußabschnitte 210 an den Gehäuseabschnitten 21 spielfrei an dem Trägerelement 4 festgelegt wird.

An einem dem Boden 20 abgewandten Ende weist das Lagerelement 22 zudem einen konischen Abschnitt 220 in Form eines Zentrierkonus auf (siehe Fig. 8 und 9), der bei Verspannen des Seilausgangsgehäuses 2 zu dem Antriebsgehäuse 7 mit einem komplementär geformten Zentriereingriff an dem Lagerelement 72 des Antriebsgehäuses 7 in Eingriff gelangt und auf diese Weise eine zentrierte Lage des Lagerelements 22 des Seilausgangsgehäuses 2 zu dem Lagerelement 72 des Antriebsgehäuses 7 einstellt. Sowohl der konische Abschnitt 220 am Ende des Lagerelements 22 als auch der Zentriereingriff 722 am Kopf des Lagerelements 72 sind konisch geformt und dabei komplementär zueinander, sodass bei einem Eingriff das Lagerelement 22 des Seilausgangsgehäuses 2 in zentrierter Weise zu dem Lagerelement 72 des Antriebsgehäuses 7 ausgerichtet wird.

Das Lagerelement 22 des Seilausgangsgehäuses 2 und das Lagerelement 72 des Antriebsgehäuses 7 schaffen hierbei eine gemeinsame Drehachse D für die Seiltrommel 3 einerseits und das Antriebsrad 6 andererseits, sodass die Seiltrommel 3 und das Antriebsrad 6 sich im Betrieb koaxial zueinander und gemeinsam miteinander verdrehen können.

Der der Erfindung zugrunde liegende Gedanke ist nicht auf die vorangehend geschilderten Ausführungsbeispiele beschränkt, sondern lässt sich grundsätzlich auch im Rahmen der Ansprüche, in gänzlich andersgearteter Weise verwirklichen.

Eine Antriebsvorrichtung der beschriebenen Art ist insbesondere nicht beschränkt auf den Einsatz an einem Fensterheber, sondern kann auch zum Verstellen eines anderen Verstellelements, beispielsweise eines Schiebedachs oder dergleichen, in einem Fahrzeug dienen.

Die Antriebsvorrichtung kann in einfacher Weise insbesondere unter Verwendung eines (einzigen) axial verspannenden Befestigungselements montiert werden. Es ergibt sich eine Montage in wenigen Montageschritten, die einfach und günstig bei zuverlässiger Festlegung des Seilausgangsgehäuses und des Antriebsgehäuses an dem Trägerelement sein kann.

### Bezugszeichenliste

- 1: Antriebsvorrichtung
- 10: Seil
- 11: Führungsschiene
- 110, 111: Umlenkung
- 12: Mitnehmer
- 13: Fensterscheibe
- 2: Seilausgangsgehäuse
- 20: Boden
- 200, 201: Strukturelement (Versteifungsrippe)
- 202: Aussparung (Materialschwächung)
- 21: Gehäuseabschnitt
- 210: Fußabschnitt
- 211: Rastelement
- 212: Formschlussöffnung (Schlitzöffnung)
- 22: Lagerelement (Lagerdom)
- 220: Zentrierkonus
- 221: Öffnung
- 23: Sicherungselement
- 3: Seiltrommel
- 30: Körper
- 300: Seilrille
- 31: Hohlrad
- 310: Verzahnung
- 32: Auflageelement
- 4: Trägerelement (Aggregateträger)
- 40: Flächenabschnitt
- 41: Öffnung
- 42: Formschlusselement
- 420: Rastausnehmung
- 43: Formschlusselement
- 430: Wangenabschnitt (Stift)
- 431: Zylinderabschnitt
- 432: Stirnfläche
- 44: Ausformung
- 440: Ausformung
- 45: Anlagering
- 46: Auflagering
- 5: Dichtelement
- 50: Dichtring
- 500: Ring
- 501: Dichtlippe
- 51: Elastisches Dämpfungselement
- 510: Steg
- 511: Anlageabschnitt (Kante)
- 512: Kopfabschnitt
- 513, 514: Laschen
- 515: Öffnung
- 516: Eingriffsausnehmung
- 517: Distanzelement (Noppen)
- 52: Gekrümmter Abschnitt
- 6: Antriebsrad
- 60: Körper
- 600: Außenverzahnung
- 61: Verbindungsrad
- 610: Verzahnung
- 62: Öffnung
- 63: Dichtrand
- 7: Antriebsgehäuse
- 70: Gehäusetopf
- 71: Formschlusselement (Eingriffsbuchse)
- 710: Formschlussöffnung
- 711: Boden
- 712: Innere Mantelfläche
- 72: Lagerelement (Lagerdom)
- 720: Öffnung
- 721: Eingriffsöffnung
- 722: Zentriereingriff
- 73: Motortopf
- 74: Schneckengehäuse
- 75: Gehäusedeckel
- 76: Elektronikgehäuse
- 760: Platine
- 761: Gehäuseplatte
- 762: Steckverbinder
- 8: Motoreinheit
- 80: Elektromotor
- 800: Antriebswelle
- 81: Antriebsschnecke
- 82: Lager
- 9: Befestigungselement
- 90: Schaft
- 91: Kopf
- D: Drehachse
- X: Spiel

## Patentansprüche

1. Antriebsvorrichtung (1) für eine Verstelleinrichtung zum Verstellen eines Fahrzeugteils, insbesondere eines Fensterhebers, mit
- einem Trägerelement (4),
- einem durch eine Motoreinheit (8) antreibbaren Getriebeelement und
- einem an dem Trägerelement (4) angeordneten Antriebsgehäuse (7), das ein Lagerelement (72) zum drehbaren Lagern des Getriebeelements (6) um eine Drehachse (D) aufweist,
**dadurch gekennzeichnet,**
**dass** das Trägerelement (4) zumindest ein erstes Formschlusselement (43) und das Antriebsgehäuse (7) zumindest ein zweites Formschlusselement (71) aufweisen, die zur Drehsicherung miteinander in Eingriff stehen, wobei zwischen dem zumindest einen ersten Formschlusselement (43) und dem zumindest einen zweiten Formschlusselement (71) ein elastisches Dämpfungselement (51) angeordnet ist und wobei das erste Formschlusselement (43) und das zweite Formschlusselement (71) in einem ersten Belastungszustand über das elastische Dämpfungselement (51) entlang zumindest einer Raumrichtung zueinander gedämpft abgestützt sind und in einem gegenüber dem ersten Belastungszustand erhöhten, zweiten Belastungszustand in Anlage miteinander gelangen.

2. Antriebsvorrichtung (1) nach Anspruch 1, **dadurch gekennzeichnet, dass** das zumindest eine erste Formschlusselement (43) oder das zumindest eine Formschlusselement (71) einen Formschlusszapfen und das jeweils andere Formschlusselement (71, 43) eine Formschlussöffnung (710) aufweisen.

3. Antriebsvorrichtung (1) nach Anspruch 2, **dadurch gekennzeichnet, dass** der Formschlusszapfen (43) einen zentralen Abschnitt (431) aufweist, an dem das elastische Dämpfungselement (51) angeordnet ist.

4. Antriebsvorrichtung (1) nach Anspruch 3, **dadurch gekennzeichnet, dass** der Formschlusszapfen zumindest einen parallel zur Drehachse (D) erstreckten, von dem zentralen Abschnitt (431) radial vorspringenden Wangenabschnitt (430) und das elastische Dämpfungselement (51) zumindest einen elastischen Steg (510) aufweisen, wobei der zumindest eine Wangenabschnitt (430) und der zumindest eine elastische Steg (510) sich benachbart zueinander an dem zentralen Abschnitt (431) erstrecken.

5. Antriebsvorrichtung (1) nach Anspruch 4, **dadurch gekennzeichnet, dass** der zumindest eine elastische Steg (510) radial gegenüber dem zumindest einen Wangenabschnitt (430) vorsteht.

6. Antriebsvorrichtung (1) nach Anspruch 4 oder 5, **dadurch gekennzeichnet, dass** der zumindest eine elastische Steg (510) zum Einstellen eines elastischen Spiels des Formschlusszapfens in der Formschlussöffnung (710) an einer die Formschlussöffnung (710) umfänglich umgebenden Mantelfläche (712) anliegt.

7. Antriebsvorrichtung (1) nach einem der Ansprüche 3 bis 6, **dadurch gekennzeichnet, dass** der Formschlusszapfen mehrere umfänglich um den zentralen Abschnitt (431) verteilte Wangenabschnitte (430) und das elastische Dämpfungselement (51) mehrere Stege (510) aufweist, wobei jeder Wangenabschnitt (430) zwischen einem Paar von Stegen (510) angeordnet ist.

8. Antriebsvorrichtung (1) nach einem der Ansprüche 3 bis 7, **dadurch gekennzeichnet, dass** das elastische Dämpfungselement (51) einen Kopfabschnitt (511) aufweist, der den zentralen Abschnitt (431) an einer quer zur Drehachse (D) erstreckten Stirnfläche (432) zumindest teilweise überdeckt.

9. Antriebsvorrichtung (1) nach Anspruch 8, **dadurch gekennzeichnet, dass** an dem Kopfabschnitt (511) zumindest ein Distanzelement (517) zum Bereitstellen eines Toleranzausgleichs zwischen dem Formschlusszapfen und einem Boden (711) der Formschlussöffnung (710) angeordnet ist.

10. Antriebsvorrichtung (1) nach einem der vorangehenden Ansprüche, **durch gekennzeichnet** einen Dichtring (50), der einstückig mit dem zumindest einen elastischen Dämpfungselement (51) geformt ist und ausgebildet ist, einen Übergang zwischen dem Trägerelement (4) und dem Antriebsgehäuse (7) feuchtigkeitsdicht abzudichten.

11. Antriebsvorrichtung (1) nach einem der vorangehenden Ansprüche, **dadurch gekennzeichnet, dass** die Antriebsvorrichtung (1) eine Seiltrommel (3) und ein an einer von dem Antriebsgehäuse (7) abgewandten Seite des Trägerelements (4) angeordnetes Seilausgangsgehäuse (2) aufweist, das ein Lagerelement (22) zum drehbaren Lagern der Seiltrommel (3) um die Drehachse (D) aufweist.

12. Antriebsvorrichtung (1) nach Anspruch 11, **dadurch gekennzeichnet, dass** das Seilausgangsgehäuse (2) und das Antriebsgehäuse (7) über ein zwischen dem Lagerelement (22) des Seilausgangsgehäuses (2) und dem Lagerelement (72) des Antriebsgehäuses (7) wirkendes Befestigungselement (9) aneinander befestigt sind.

13. Antriebsvorrichtung (1) nach Anspruch 12, **dadurch gekennzeichnet, dass** das Befestigungselement (9) durch ein Schraubelement ausgebildet ist, das das Seilausgangsgehäuse (2) und das Antriebsgehäuse (7) axial entlang der Drehachse (D) zueinander verspannt.

14. Antriebsvorrichtung (1) nach Anspruch 12 oder 13, **dadurch gekennzeichnet, dass** das Befestigungselement (9) eine Öffnung (720) eines der Lagerelemente (22, 72) durchgreift und in das andere Lagerelement (72, 22) zur Befestigung eingreift.

15. Antriebsvorrichtung (1) nach einem der Ansprüche 12 bis 14, **dadurch gekennzeichnet, dass** das Seilausgangsgehäuse (2) zumindest einen radial zum Lagerelement (22) des Seilausgangsgehäuses (2) beabstandeten Gehäuseabschnitt (21) aufweist, der derart an dem Trägerelement (4) festgelegt ist, dass das Seilausgangsgehäuse (2) zur Drehachse (D) drehfest an dem Trägerelement (4) gehalten ist, wobei der Gehäuseabschnitt (21) insbesondere einen Fußabschnitt (210) aufweist, der an das Trägerelement (4) angesetzt ist, wobei ein Formschlusselement (42) an dem Fußabschnitt (210) oder dem Trägerelement (4) in eine Formschlussöffnung (212) an dem jeweils anderen Bauteil formschlüssig eingreift.

## Claims

1. A drive apparatus (1) for an adjusting device for adjusting a vehicle part, in particular a window lifter, having
- a carrier element (4),
- a transmission element which can be driven by means of a motor unit (8), and
- a drive housing (7) which is arranged on the carrier element (4) and which has a bearing element (72) for rotatably bearing the transmission element (6) about an axis of rotation (D),
**characterized**
**in that** the carrier element (4) has at least one first positive-locking element (43) and the drive housing (7) has at least one second positive-locking element (71), which are in engagement with one another for a rotation-preventing securing action, wherein an elastic damping element (51) is arranged between the at least one first positive-locking element (43) and the at least one second positive-locking element (71) and wherein the first positive-locking element (43) and the second positive-locking element (71) are supported in damped fashion relative to one another along at least one spatial direction via the elastic damping element (51) in a first load state and come into contact with one another in a second load state which is increased in relation to the first load state.

2. The drive apparatus (1) as claimed in claim 1, **characterized in that** the at least one first positive-locking element (43) or the at least one positive-locking element (71) has a positive-locking pin and the respective other positive-locking element (71, 43) has a positive-locking opening (710).

3. The drive apparatus (1) as claimed in claim 2, **characterized in that** the positive-locking pin (43) has a central portion (431) on which the elastic damping element (51) is arranged.

4. The drive apparatus (1) as claimed in claim 3, **characterized in that** the positive-locking pin has at least one cheek portion (430) which extends parallel to the axis of rotation (D) and which protrudes radially from the central portion (431), and the elastic damping element (51) has at least one elastic web (510), wherein the at least one cheek portion (430) and the at least one elastic web (510) extend adjacent to one another on the central portion (431).

5. The drive apparatus (1) as claimed in claim 4, **characterized in that** the at least one elastic web (510) protrudes radially with respect to the at least one cheek portion (430).

6. The drive apparatus (1) as claimed in claim 4 or 5, **characterized in that**, in order to set an elastic play of the positive-locking pin in the positive-locking opening (710), the at least one elastic web (510) bears against a shell surface (712) which circumferentially surrounds the positive-locking opening (710).

7. The drive apparatus (1) as claimed in any of claims 3 to 6, **characterized in that** the positive-locking pin has multiple cheek portions (430) distributed circumferentially about the central portion (431), and the elastic damping element (51) has multiple webs (510), wherein each cheek portion (430) is arranged between a pair of webs (510).

8. The drive apparatus (1) as claimed in any of claims 3 to 7, **characterized in that** the elastic damping element (51) has a head portion (511) which at least partially overlaps the central portion (431) at a face surface (432) extending transversely with respect to the axis of rotation (D).

9. The drive apparatus (1) as claimed in claim 8, **characterized in that** at least one spacer element (517) for providing tolerance compensation between the positive-locking pin and a base (711) of the positive-locking opening (710) is arranged on the head portion (511) .

10. The drive apparatus (1) as claimed in any of the preceding claims, **characterized by** a sealing ring (50) which is formed in one piece with the at least one elastic damping element (51) and which is designed to seal off a transition between the carrier element (4) and the drive housing (7) in moisture-tight fashion.

11. The drive apparatus (1) as claimed in any of the preceding claims, **characterized in that** the drive apparatus (1) has a cable drum (3) and a cable exit housing (2) which is arranged on a side of the carrier element (4) which is averted from the drive housing (7), which cable exit housing has a bearing element (22) for rotatably bearing the cable drum (3) about the axis of rotation (D).

12. The drive apparatus (1) as claimed in claim 11, **characterized in that** the cable exit housing (2) and the drive housing (7) are fastened to one another by means of a fastening element (9) which acts between the bearing element (22) of the cable exit housing (2) and the bearing element (72) of the drive housing (7).

13. The drive apparatus (1) as claimed in claim 12, **characterized in that** the fastening element (9) is formed by a screw element which braces the cable exit housing (2) and the drive housing (7) relative to one another axially along the axis of rotation (D).

14. The drive apparatus (1) as claimed in claim 12 or 13, **characterized in that** the fastening element (9) engages through an opening (720) of one of the bearing elements (22, 72) and engages into the other bearing element (72, 22) for fastening purposes.

15. The drive apparatus (1) as claimed in any of claims 12 to 14, **characterized in that** the cable exit housing (2) has at least one housing portion (21) which is spaced apart radially from the bearing element (22) of the cable exit housing (2) and which is fixed to the carrier element (4) such that the cable exit housing (2) is held rotationally fixedly on the carrier element (4) with respect to the axis of rotation (D), wherein the housing portion (21) in particular has a foot portion (210) which is mounted onto the carrier element (4), wherein a positive-locking element (42) on the foot portion (210) or on the carrier element (4) engages in positively locking fashion into a positive-locking opening (212) on the respective other component.

## Revendications

1. Dispositif d'entraînement (1) pour un dispositif de réglage pour le réglage d'une partie de véhicule, en particulier un lève-vitre, avec
- un élément de support (4),
- un élément de transmission entraînable par une unité moteur (8) et
- un boîtier d'entraînement (7) agencé au niveau de l'élément de support (4) qui présente un élément de palier (72) pour le logement rotatif de l'élément de transmission (6) autour d'un axe de rotation (D),
**caractérisé en ce**
**que** l'élément de support (4) présente au moins un premier élément à complémentarité de formes (43) et le boîtier d'entraînement (7) présente au moins un second élément à complémentarité de formes (71) qui sont en prise l'un avec l'autre pour le blocage en rotation, dans lequel un élément d'amortissement (51) élastique est agencé entre l'au moins un premier élément à complémentarité de formes (43) et l'au moins un second élément à complémentarité de formes (71) et dans lequel le premier élément à complémentarité de formes (43) et le second élément à complémentarité de formes (71) sont en appui en étant amortis l'un par rapport à l'autre dans un premier état de sollicitation par le biais de l'élément d'amortissement (51) élastique le long d'au moins une direction spatial et parviennent en appui l'un avec l'autre dans un second état de sollicitation, augmenté par rapport au premier état de sollicitation.

2. Dispositif d'entraînement (1) selon la revendication 1, **caractérisé en ce que** l'au moins un premier élément à complémentarité de formes (43) ou l'au moins un élément à complémentarité de formes (71) présente un tenon à complémentarité de formes et respectivement l'autre élément à complémentarité de formes (71, 43) présente une ouverture à complémentarité de formes (710).

3. Dispositif d'entraînement (1) selon la revendication 2, **caractérisé en ce que** le tenon à complémentarité de formes (43) présente une section centrale (431) au niveau de laquelle l'élément d'amortissement (51) élastique est agencé.

4. Dispositif d'entraînement (1) selon la revendication 3, **caractérisé en ce que** le tenon à complémentarité de formes présente au moins une section de joue (430) étirée parallèlement à l'axe de rotation (D), en saillie radiale de la section centrale (431) et l'élément d'amortissement (51) élastique présente au moins une nervure (510) élastique, dans lequel l'au moins une section de joue (430) et l'au moins une nervure (510) élastique s'étendent de manière contiguë l'une à l'autre au niveau de la section centrale (431).

5. Dispositif d'entraînement (1) selon la revendication 4, **caractérisé en ce que** l'au moins une nervure (510) élastique dépasse radialement par rapport à l'au moins une section de joue (430).

6. Dispositif d'entraînement (1) selon la revendication 4 ou 5, **caractérisé en ce que** l'au moins une nervure (510) élastique repose pour le réglage d'un jeu élastique du tenon à complémentarité de formes dans l'ouverture à complémentarité de formes (710) contre une surface enveloppe (712) entourant sur la périphérie l'ouverture à complémentarité de formes (710).

7. Dispositif d'entraînement (1) selon l'une des revendications 3 à 6, **caractérisé en ce que** le tenon à complémentarité de formes présente plusieurs sections de joue (430) distribuées sur la périphérie autour de la section centrale (431) et l'élément d'amortissement (51) élastique présente plusieurs nervures (510), dans lequel chaque section de joue (430) est agencée entre une paire de nervures (510).

8. Dispositif d'entraînement (1) selon l'une des revendications 3 à 7, **caractérisé en ce que** l'élément d'amortissement (51) élastique présente une section de tête (511) qui recouvre au moins partiellement la section centrale (431) au niveau d'une surface avant (432) étirée transversalement à l'axe de rotation (D).

9. Dispositif d'entraînement (1) selon la revendication 8, **caractérisé en ce qu'**au moins un élément d'écartement (517) est agencé au niveau de la section de tête (511) pour la fourniture d'une compensation de tolérance entre le tenon à complémentarité de formes et un fond (711) de l'ouverture à complémentarité de formes (710).

10. Dispositif d'entraînement (1) selon l'une des revendications précédentes, **caractérisé par** un anneau étanche (50) qui est formé et réalisé d'un seul tenant avec l'au moins un élément d'amortissement (51) élastique afin de rendre étanche une transition entre l'élément de support (4) et le boîtier d'entraînement (7) de manière étanche à l'humidité.

11. Dispositif d'entraînement (1) selon l'une des revendications précédentes, **caractérisé en ce que** le dispositif d'entraînement (1) présente un tambour à câble (3) et un boîtier de sortie de câble (2) agencé au niveau d'un côté éloigné du boîtier d'entraînement (7) de l'élément de support (4) qui présente un élément de palier (22) pour le logement rotatif du tambour à câble (3) autour de l'axe de rotation (D).

12. Dispositif d'entraînement (1) selon la revendication 11, **caractérisé en ce que** le boîtier de sortie de câble (2) et le boîtier d'entraînement (7) sont fixés l'un à l'autre par le biais d'un élément de fixation (9) agissant entre l'élément de palier (22) du boîtier de sortie de câble (2) et l'élément de palier (72) du boîtier d'entraînement (7).

13. Dispositif d'entraînement (1) selon la revendication 12, **caractérisé en ce que** l'élément de fixation (9) est réalisé par un élément de vis qui serre le boîtier de sortie de câble (2) et le boîtier d'entraînement (7) axialement le long de l'axe de rotation (D) l'un par rapport à l'autre.

14. Dispositif d'entraînement (1) selon la revendication 12 ou 13, **caractérisé en ce que** l'élément de fixation (9) traverse une ouverture (720) d'un des éléments de palier (22, 72) et vient en prise dans l'autre élément de palier (72, 22) pour la fixation.

15. Dispositif d'entraînement (1) selon l'une des revendications 12 à 14, **caractérisé en ce que** le boîtier de sortie de câble (2) présente au moins une section de boîtier (21) espacée radialement par rapport à l'élément de palier (22) du boîtier de sortie de câble (2) qui est fixée à l'élément de support (4) de telle manière que le boîtier de sortie de câble (2) soit maintenu sans pouvoir tourner par rapport à l'axe de rotation (D) au niveau de l'élément de support (4), dans lequel la section de boîtier (21) présente en particulier une section de pied (210) qui est placée sur l'élément de support (4), dans lequel un élément à complémentarité de formes (42) vient en prise par complémentarité de formes au niveau de la section de pied (210) ou de l'élément de support (4) dans une ouverture à complémentarité de formes (212) au niveau de respectivement l'autre composant.
